(19) Europäisches Patentamt
European Patent Office
Office européen des brevets

(11) EP 4 328 569 A1

(12) EUROPEAN PATENT APPLICATION

(43) Date of publication:
**28.02.2024 Bulletin 2024/09**

(21) Application number: **22191798.2**

(22) Date of filing: **23.08.2022**

(51) International Patent Classification (IPC):
***G01N 21/64*** *(2006.01)* *G01N 21/05* *(2006.01)*

(52) Cooperative Patent Classification (CPC):
**G01N 21/6486; G01N 21/645;** G01N 21/05;
G01N 2021/6463; G01N 2021/6482

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NanoTemper Technologies GmbH**
**81369 München (DE)**

(72) Inventors:
- **Lüdecke, Annemarie**
  **81369 München (DE)**
- **Haslinger, Robert**
  **81369 München (DE)**
- **Dorfner, Valentin**
  **81369 München (DE)**

(74) Representative: **Vossius & Partner**
**Patentanwälte Rechtsanwälte mbB**
**Siebertstraße 3**
**81675 München (DE)**

# (54) MEASURING HIGH PROTEIN CONCENTRATIONS

(57) A method for measuring a concentration value of a substance within a sample is provided. The method comprises the following steps: providing a sample container (4) with a transparent wall segment (10) on at least one side (S) of the sample container (4), providing a sample (2) having an unknown concentration of the substance in the sample container (4), providing an excitation radiation (R1) having a focal point (F) such that the excitation radiation reaches into the sample container (4) via the wall segment (10) such that the focal point (F) is located at a first distance (δ) from the wall segment (10), capturing a measurement value by measuring an induced radiation (R2) being induced by an interaction of the excitation radiation (R1) with the sample (2), wherein the interaction comprises fluorescence and wherein the induced radiation leaves the sample container (4) via said wall segment (10), and comparing the measurement value to a comparative value to derive a value indicative of the unknown concentration value.

84
8
83
82
65
81
64
S
R2
R1
d2
62
R1
d1
63
61
10
6
sample
2
4
Fig. 1

EP 4 328 569 A1

## Description

The present invention relates to a method and a device for measuring a concentration value of a substance, for example, an amino acid or a protein within a sample.

Protein concentrations are routinely measured in almost all situations in which proteins are used or produced. This includes academic biochemistry labs, but also commercial contexts like the production of antibodies, for example monoclonal antibodies, e. g. for cancer therapy.

In a lab context, it is usually feasible to take a small sample volume of a protein solution which may be destroyed or potentially contaminated during the measurement process. However, in a commercial production setting it would disturb the workflow to take a sample and send it to a laboratory for testing. Thus, in commercial protein production, mixing, fill-and-finish setting, techniques are needed that can (1) be integrated into the production workflow and/or (2) do not disturb the integrity of the product, e.g. do not need additives like dyes. Specifically, exposing the product to potential contamination by sampling and sample preparation brings with it the risk that errors are introduced.

In laboratories, both colorimetric methods as well as absorbance methods are used. Colorimetric methods typically require the addition of reagents such as dyes, e.g. Bradford assay and are thus not suitable for a continuous production setting.

In production settings, amongst others, the refractive index can be measured, which returns information about the optical density of the medium. This is, however, not specific to protein concentration, but also influenced by additives such as detergents, (buffering) salts and excipients for protein stabilization. Another method is the absorption of UV (ultraviolet) radiation, also denominated UV light herein, usually at the peak absorbance of the corresponding amino acid or protein, e. g. at 280 nm which is at the maximum of the absorbance of the amino acid tryptophan. Sometimes absorbance at 260 nm is measured as well to monitor DNA contaminations.

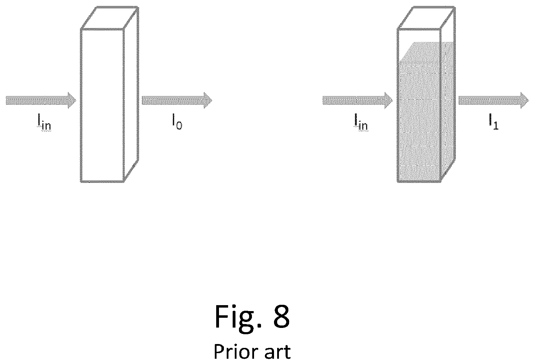

An optical setup for an absorbance measurement according to prior art usually consists of collimated light, preferably with a wavelength of 280nm, which passes through the substance or medium to be measured. As sketched in Fig. 8, right side, light $I_{in}$ enters the medium at a first side and light $I_1$ leaves the medium at the opposite side. The transmitted light $I_1$ is measured by a sensor and compared to the amount of incident light $I_o$ - as sketched on the left side of Fig. 8 - that reaches the sensor without the absorbing substance present (e.g. water or buffer blank). Then the intensity ratio $I_1/I_o$ between the light reaching the sensor after passing the substance or medium, i.e. $I_1$ and the light hitting the sensor without passing the substance or medium, i.e. $I_0$ is calculated. The absorbance A is the related by the Lambert Beer Law as follows:

$$A = -log_{10} {}^{I_1}/_{I_0}.$$

The concentration $c$ can be inferred from the absorbance A by knowing the extinction coefficient $\varepsilon$ and pathlength $l$:

$$c = \frac{A}{\varepsilon\, l}.$$

While often $I_{in}$ and $I_1$ are used in the above formula for $I_0$ and $I_1$ respectively, the actual measurement is usually done with an empty, water or buffer filled cuvette as depicted in Fig. 8.

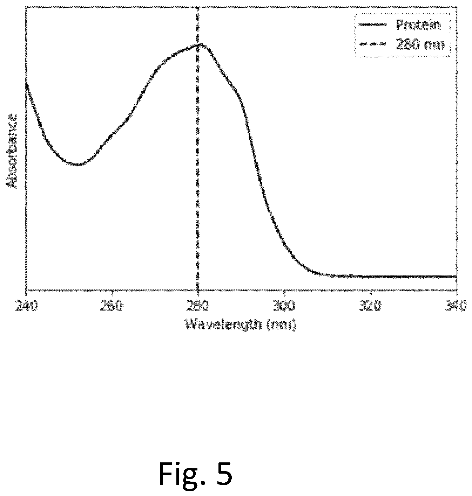

Accordingly, the pathlength $l$ of the radiation within the sample is fixed. However, absorbance measurements according to this prior art are particularly unreliable at both very high and very low concentrations. At very low concentrations, the difference between the light passing the medium and not passing it, is so low, that it is hard to detect. At very high concentrations, almost no light reaches the detector after passing through the medium, resulting in the absorbance not being proportional to the concentration. For example, the amino acid tryptophan shows an absorption spectrum having a maximum at 280 nm, as illustrated in Fig. 5. For high absorbance values typical of protein concentrations over 100 to 150 g/L, almost all light is absorbed over the typical measurement path length of 1 cm in e.g. a cuvette. One way to overcome this is to make a dilution of the sample and then correct the measured absorbance by the dilution factor. However, this requires further steps to be taken, and any dilution error when working with such a high concentration sample can lead to significantly large errors.

Accordingly, measurements at 280 nm are very poor at both very low and very high concentrations.

In some cases, this limitation can be avoided by adjusting the pathlength. This is done in the photospectrometer NanoDrop™ in devices of the FlowVPE® series. However, at very high concentrations, it becomes increasingly difficult to achieve short enough path lengths.

Therefore, there is a need for an improved method and an improved device for measuring a concentration value of a substance such as for example an amino acid or a protein. Moreover, there is a need for an improved method and an improved device for measuring a concentration value of a substance in such a way that it is particularly suitable for a continuous production setting.

This object of the present invention is achieved by the independent claims. The dependent claims refer to preferred embodiments of the present invention. Additional or alternative aspects of the present disclosure are addressed throughout this specification.

SUMMARY

According to the present disclosure a method for measuring a concentration value of a substance within a sample is provided. The method comprises the following steps: providing a sample container with at least a transparent wall segment on at least one side of the sample container, providing a sample having an unknown concentration of the substance in the sample container, and providing an excitation radiation. The excitation radiation having preferably a focal point such that the excitation radiation reaches into the sample container via the transparent wall segment such that the focal point is located at a first distance from the wall segment. The method further comprises the step of capturing a measurement value by measuring an induced radiation being induced by an interaction of the excitation radiation with the sample, wherein the interaction comprises fluorescence and wherein the induced radiation leaves the sample container via said wall segment, preferably at the at least one side, and comparing the measurement value to a comparative value to derive a value indicative of the unknown concentration value.

According to a further aspect of the present application, a device for measuring a concentration value of a substance within a sample is provided. The device comprises a sample container with at least a transparent wall segment on at least one side of the sample container, first means to generate an excitation radiation, preferably having a focal point such that the excitation radiation reaches into the sample container via the transparent wall segment such that the focal point is located at a first distance from the wall segment, and second means to capture a measurement value by measuring an induced radiation being induced by an interaction of the excitation radiation with the sample, wherein the interaction comprises fluorescence and wherein the induced radiation leaves the sample container via said wall segment.

The first means to generate excitation radiation is preferably an excitation radiation emitting device, e.g., a source which emits radiation such as a light source. Preferably, the light source emits radiation or light at a specific wavelength, preferably at a preferred wavelength range. Such a light source is preferably a monochromatic light source. Preferably, the light from the monochromatic light source is coherent and has preferably a wavelength between 290 and 330 nm, preferably between 305 and 310 nm, e.g. 305 nm or 310 nm. A person skilled in the art understands that a real light source can of course never be exactly monochromatic, i.e., have a zero optical bandwidth. Hence, the term monochromatic light source refers to a light source with a very limiting wavelength range or bandwidth, as mentioned above. In other words, the term monochromatic and quasi-monochromatic are used interchangeable within the present application. For instance, laser and/or LED (light emitting diode) sources are often monochromatic or quasi-monochromatic, i.e., the optical bandwidth is small enough that certain behavior of the light can hardly be distinguished from that of truly monochromatic light.

However, it is generally not necessary to use a coherent light source. It is possible to use a broad light source, preferably in combination with a proper filter set in the corresponding wavelength area. For example, a 310 nm LED with a wavelength peak at 310 nm can be used, having a wavelength range from e.g. 290 nm to 330 nm. The transmission of the LED may be restricted by a filter, e.g. a filter between 302 nm and 317 nm. More generally, the first means may comprise a radiation source for generating the excitation radiation, wherein the radiation source is configured to radiate an electromagnetic radiation within a first spectrum or range and a filter or filter set configured to restrict the first spectrum or range to a second spectrum or range which is smaller than the first spectrum or range.

Preferably, the (quasi-)monochromatic light source is a coherent light source, e.g., a laser, preferably a diode laser, preferably a diode laser selected from the group consisting of frequency stabilized diode laser, DPSS laser, PPLN frequency doubled diode laser, frequency multiplied DPSS laser, diode pumped fiber laser, frequency multiplied diode pumped fiber laser, and diode pumped upconversion fiber laser. Preferably, the laser has a coherence length of at least 0.1 mm. The laser has preferably a coherence length of at least 0.1 mm, preferably at least 1 mm. More generally, any light source can be used as soon as the optical bandwith is small enough and this can be realized by the usage of optical filters. Of course, a laser can be used, or any light source which has a certain intensity in the range of the excitation filter.

The second means is preferably a detector for detecting the induced radiation, e.g., a light detector. Such a detector may be based on different sensor technologies. Preferably, the light detector is a photomultiplier tube (PMT), a silicon photomultiplier (SiPM), or an Avalanche photodiode (APD) photon counting detector, more preferably a PMT or a SiPM.

The induced interactions comprise preferably fluorescence, wherein fluorescence is typically emitted in all directions. Therefore, the second means - also simply denominated "capture means" herein - can be suitably positioned on the same side of the sample container as the first means - also denominated "excitation radiation means" herein. For example, the excitation radiation means and the capture means can be respectively positioned on the side of the sample container on which its transparent wall segment is located. In this way, the second means, or "capture means", and the first means, or "excitation radiation means", can be integrated particularly suitably in one optics module.

Thus, spatial fluorescence can be suitably used as a direct measure for extinction of the excitation radiation between the wall segment of the sample container, more specifically between an inner surface of the wall segment, and the focal point and based on this extinction measurement, information about the corresponding concentration value of the substance within the sample can be suitably deduced.

Moreover, neither the excitation radiation means nor the capture means of the device according to the present description have to be immersed into the sample. In this way, the risk of contamination of the sample is eliminated or at least significantly reduced. Consequently, e.g. a corresponding cleaning of the sample subsequent to the measurement is not necessary. Particularly, the method can be carried out in a non-invasive way.

Moreover, the excitation radiation means and the sample container can be easily provided in form of two parts which are generally movable independently from each other. Therefore, the device allows positioning the focal point of the excitation radiation within the sample at different distances from the wall segment (e.g. inner side of the wall segment). Thus, the device allows for varying the pathlength of the excitation radiation within the sample in a particularly suitable manner. Consequently, the device allows for measuring concentration values within a particularly great range. For example, a concentration value of a substance having a very high concentration, such as e.g. 300 g/L can be suitably and accurately measured as well as a concentration value of a substance having a very low concentration such as e.g. 100 mg/L or even 20 mg/L.

Further, the sample container can be configured such that the sample can flow therethrough, for example by using flow cell, e.g., a tube-shaped sample container having corresponding connections at both ends. Such a flow cell may be formed entirely of a transparent material, e.g., glass or comprises only a transparent wall part, e.g. in the form of a window.

Besides, a very fast measurement can be achieved that is particularly little susceptible to external influences.

The method and/or the device may be used for or within protein concentration determination and/or monitoring deviation from a pre-defined set-point, for example in protein production (e.g. biopharmaceutical, industrial enzyme production, waste water and waste water treatment), being part of a Process Analytical Tool (PAT) off-line, on- or at-line, most preferably in-line. The device can be integrated into an existing system or stand-alone.

The method and/or the device may be used for or within a production process (e.g. lab scale, small/pilot scale, medium scale, large production scale): Before and after purification, before and after filtration (e.g. Tangential Flow, viral, sterile), before and after up-concentrating, before and after filling (i.e. fill and finish) into final receptacle/container.

The method and/or the device may be used for or within a formulation development in protein biopharmaceutical, industrial enzyme protein production, in multi-well plates, glass vials etc. where the measuring device can be stand-alone, integrated into existing devices, where the existing device may also include sampling, sample handling, sample treatment.

The method and/or the device may be used for or within after solubilization of lyophilized protein (for use in solid-state formulation development) to monitor solubilization rate, concentration determination after complete solubilization, and/or for use in the final application of the solid product, where the product is solubilized prior to use.

The method may further comprise the following steps: providing the excitation radiation at a further focal point at a second distance different from the first distance, and capturing a corresponding second measurement value, wherein the step of comparing the measurement value to a comparative value to derive a value indicative of the unknown concentration value further comprises comparing the second measurement value to a second comparative value. In this way, the accuracy of the measurement can be generally increased.

The method may further comprise the following steps: providing a reference sample having a known concentration of the substance in the sample container or in a corresponding further sample container, providing the excitation radiation, capturing a reference value by measuring a reference induced radiation being induced by an interaction of the excitation radiation with the reference sample, and determining the comparative value based on the reference value. In this way, the comparative value can be obtained in a particularly suitable way. If the first-mentioned sample container is used, i.e. if one and the same sample container is used for obtaining both the comparative value and the value indicative of the unknown concentration value, an unwanted influence of the sample container on the accuracy of the measurement can be kept particularly low.

Preferably, the reference sample differs from the first-mentioned sample at most in the concentration of the substance. Specifically, the sample and the reference sample may show an identical formulation (buffer), i.e., an identical environment.

The corresponding sample container may be identical in construction to the first-mentioned sample container. The corresponding sample container may have a transparent wall segment that is identical in construction to the wall segment of the first-mentioned sample container. Since the first means generating the excitation radiation and the second means capturing radiation from the sample are preferably located on the same side of the sample container, it is already sufficient if the sample container comprises a transparent wall segment on at least one side. However, often it is practical to provide a sample container that is made from one material what is transparent, e.g., a glass vial, a glass syringe, etc. which provides transparency of an entire surrounding wall.

Additionally, the intensity of the excitation radiation may be measured. The intensity of the excitation radiation may be measured when providing the excitation radiation reaching the sample having the unknown concentration as well as when providing the excitation radiation reaching the reference sample. This is preferably advantageous with regard to the stability of the measurement.

The method may further comprise the following steps: capturing a second reference value based on the second distance and determining a second comparative value based on the second reference value. In this way, the accuracy of the measurement can be further increased.

Various embodiments may implement the following features:

The device may be configured to focus the excitation radiation at a further focal point at a second distance different from the first distance. This enables an improved accuracy of the measurement.

The device may be configured to focus the excitation radiation at three or more different distances. This enables an even further improved accuracy of the measurement.

The device may be configured to change a spacing or distance between the first means and the sample container to focus the excitation radiation at two or more different distances. This allows for a particularly easy manageability of the device. Alternatively or additionally, the first means may comprise an optical means configured to change focusing such that a focal point can be generated subsequently at two or more different distances.

The device may be configured to change the spacing between the first means and the sample container in a stepwise manner or in a continuous manner. For instance, the device may be constructed that only the first means is movable and the container is provided at a fixed position. According to another embodiment, only the container is movable and the first means is fixed. It is also possible that both, the first means and the sample container are movable. A configuration to change the spacing in a stepwise manner may be advantageous, as this allows for a particularly fast measurement process. Specifically, pre-positioned relative measuring positions or "depths" between the first means and the sample container can be provided. In this way, a system with a certain number of different (and respectively fixed) depths can be provided at which the corresponding measurements can be carried out.

According to another embodiment, the first means and the container may be provided with a fixed spacing in between and the first means comprises at least two or more means for measuring at different depths, e.g. two or more optics. According to still another embodiment, measurements at different depths may be achieved by providing at least two devices, wherein these at least two devices are configured to measure at different depths.

The excitation radiation means and the capture means for capturing the induced radiation may be located on the same side of the sample container, preferably such that it is not necessary to direct the excitation radiation through the sample. As mentioned above, fluorescence is typically emitted in all directions, i.e., also in the direction opposite to the excitation radiation.

The sample container may be configured such that the sample can flow through the sample container, passing the wall segment.

The sample container may be tube-shaped. The sample container may have a circular, rectangular or oval cross-section. The sample container may be a hand-held device.

The transparent wall segment of the sample container may be made of glass, quartz glass, sapphire or plastic. Preferably, the sample container or preferably at least the window of the sample container are made of glass, preferably glass with no or only minor auto fluorescence characteristics, for example of borosilicate glass and/or quartz glass and/or synthetic fused silica.

The sample container may be a tube, a flowtube, a flow cell, a cuvette, a vial, a syringe, a capillary or a plate.

The sample container, for example in the form of a capillary can be made of glass and/or a polymer and/or at least one of borosilicate glass, borosilicate 3.3 glass (for example Duranglas), quartz glass such as Suprasil, Infrasil, synthetically produced quartz glass, soda lime glass, Bk-7, ASTM Type 1 Class A glass, ASTM Type 1 Class B glass. The polymers may contain: PTFE, PMMA, Zeonor™, Zeonex™, Teflon AF, PC, PE, PET, PPS, PVDF, PFA, FEP and/or acrylic glass.

The excitation radiation may show a wavelength spectrum within 200 nm and 400 nm. The excitation radiation may show a pre-determined intensity within the wavelength spectrum. The first distance may be chosen in dependence on the substance and the wavelength or wavelength spectrum of the excitation radiation such that increasing the concentration causes increasing the induced radiation. This allows for a particularly reliable measurement, having high accuracy.

The substance may be a protein and/or an amino acid, for example histidine or an aromatic amino acid, for example tryptophan, tyrosine, or phenylalanine, or a group of amino acids, e. g., aromatic amino acids. More generally, the substance may be a substance in form of a "label" attached to any biomolecule.

The substance may be an antibody. Antibodies are typically larger approximately 1200 amino acids in total, although not of a single polypeptide chain. Specifically, the substance may be a covalently assembled oligomer.

The substance may be a protein-based nucleic acid delivery system, for example in the form of nanoparticles, e.g. adeno-associated viruses, adenoviruses, synthetic (designed) protein systems. These could also be termed "defined/designed/regular higher order protein based complexes, structures, nanoparticles". Further, the substance may be lipid, or synthetic, nanoparticles that function as nucleic acid and/or protein delivery systems, harboring one or more protein, either inside the nanoparticle (where the protein is the cargo) or on the surface of the nanoparticle, where the protein serves to target the nanoparticle to a specific cell type or tissue, and the nucleic acid is the cargo.

The substance may be peptides, e.g. di- and tripeptides, oligopeptides, e.g. three to ten amino acids, or polypeptides, i.e. more than ten amino acids or a protein as a special case, for example with more than hundred amino acids.

It is well known that the configuration of proteins can change at different temperatures and that the optical behavior may change accordingly. In principle, it is advantageous to perform the measurements at standard temperature and pressure or in the vicinity of standard conditions. However, the present invention is not limited to a particular temperature range. For example, the sample can also be tempered to the desired temperature using a tempering device. It is preferred that the measurement of the substance with the unknown concentration or the monitoring of the concentration is performed at the same or substantially the same temperature as the measurement of the reference sample with a known concentration. In other words, it is preferred to compare measurements that were performed at the same or similar conditions.

The measurement value may be an intensity value. The measurement value may be an intensity-distance measurement, i.e. a measured intensity value of the induced radiation correlated to the corresponding distance between the wall segment of the sample container and the focal point of the excitation radiation.

The intensity value may be (a) an intensity at a maximum of an intensity distribution, (b) an integrated intensity of an intensity distribution, (c) a width of the curve at pre-determined height, e.g. 50% of maximum, full width at half maximum or at several pre-determined heights of an intensity distribution, (d) a height at a predetermined location of the intensity distribution, preferably shifted from the maximum, (e) a skewness of an intensity distribution, and/or (f) a kurtosis of an intensity distribution.

According to a further aspect of the present description, the induced radiation may not only comprise fluorescence, but alternatively or additionally scattered radiation, particularly an appreciable amount of scattered radiation.

Therefore, a method for measuring a concentration value of a substance within a sample may comprise the following steps: (i) providing a sample container with a transparent wall segment on at least one side of the sample container, (ii) providing a sample having an unknown concentration of the substance in the sample container, (iii) providing an excitation radiation having a focal point such that the excitation radiation reaches into the sample container via the wall segment such that the focal point is located at a first distance from the wall segment, (iv) capturing a measurement value by measuring an induced radiation being induced by an interaction of the excitation radiation with the sample, wherein the interaction comprises fluorescence and/or scattering and wherein the induced radiation leaves the sample container via said wall segment, and (iv) comparing the measurement value to a comparative value to derive a value indicative of the unknown concentration value.

This allows for suitably measuring a substance having a corresponding extinction behavior within the wavelength or wavelength spectrum of the excitation radiation. In other words, a concentration of a substance can be suitably measured which shows both absorbance and scattering or merely scattering at the corresponding wavelength or wavelength spectrum.

According to a further aspect of the present description, the excitation radiation does not need to show a focal point. Instead, it can be collimated or differently shaped. In such a case, the excitation radiation may reach into the sample - in dependence on the corresponding extinction coefficient - such that it causes fluorescence within a certain fluorescence generating area within the sample having a center which is located at a distance from the transparent wall segment of the sample container.

Therefore, a method for measuring a concentration value of a substance within a sample may comprise the following steps: (i) providing a sample container with a transparent wall segment on at least one side of the sample container, (ii) providing a sample having an unknown concentration of the substance in the sample container, (iii) providing an excitation radiation having an intensity such that the excitation radiation reaches into the sample container via the wall segment, (iv) capturing a measurement value by measuring an induced radiation being induced by an interaction of the excitation radiation with the sample, wherein the interaction comprises fluorescence and/or scattering and wherein the induced radiation leaves the sample container via said wall segment, and (v) comparing the measurement value to a comparative value to derive a value indicative of the unknown concentration value.

According to a further aspect of the present description, the sample can be provided without using a corresponding sample container. For example, the sample can be provided in form of a droplet positioned on a plate. In other words, the sample container may be "substituted" by a plate. Therefore, a method for measuring a concentration value of a substance within a sample may comprise the following steps: (i) providing a sample having an unknown concentration of the substance, (ii) providing an excitation radiation having an intensity such that the excitation radiation reaches into the sample, (iii) capturing a measurement value by measuring an induced radiation being induced by an interaction of the excitation radiation with the sample, wherein the interaction comprises fluorescence and/or scattering and wherein the induced radiation leaves the sample, and (iv) comparing the measurement value to a comparative value to derive a value indicative of the unknown concentration value.

The droplet can be positioned on a transparent plate. However, it is not necessary to use a transparent plate, as long as the curvature of the droplet allows to direct the excitation radiation into the droplet.

In particular, the present disclosure comprises the following aspects:

1. A method for measuring a concentration value of a substance within a sample, comprising the following steps:

providing a sample container with a transparent wall segment on at least one side of the sample container,
providing a sample having an unknown concentration of the substance in the sample container,
providing an excitation radiation having a focal point such that the excitation radiation reaches into the sample container via the wall segment such that the focal point is located at a first distance from the wall segment,
capturing a measurement value by measuring an induced radiation being induced by an interaction of the excitation radiation with the sample, wherein the interaction comprises fluorescence and wherein the induced radiation leaves the sample container via said wall segment, preferably at the at least one side, and
comparing the measurement value to a comparative value to derive a value indicative of the unknown concentration value.

2. The method of aspect 1, further comprising the following steps:

providing the excitation radiation at a further focal point at a second distance different from the first distance, and
capturing a corresponding second measurement value,
wherein the step of comparing the measurement value to a comparative value to derive a value indicative of the unknown concentration value further comprises comparing the second measurement value to a second comparative value.

3. The method of aspect 1 or 2, further comprising the following steps:

providing a reference sample having a known concentration of the substance in the sample container or in a corresponding further sample container,
providing the excitation radiation,
capturing a reference value by measuring a reference induced radiation being induced by an interaction of the excitation radiation, and
determining the comparative value based on the reference value.

4. The method of aspect 3 in its dependence on aspect 2, further comprising the following steps:

capturing a second reference value based on the second distance, and
determining a second comparative value based on the second reference value.

5. A device for measuring a concentration value of a substance within a sample, comprising

a sample container with a transparent wall segment on at least one side of the sample container,
first means to generate an excitation radiation having a focal point such that the excitation radiation reaches into the sample container via the wall segment such that the focal point is located at a first distance from the wall segment, and
second means to capture a measurement value by measuring an induced radiation being induced by an interaction of the excitation radiation with the sample, wherein the interaction comprises fluorescence and wherein the induced radiation leaves the sample container via said wall segment.

6. The device of aspect 5, wherein the device is configured to focus the excitation radiation at a further focal point at a second distance different from the first distance.

7. The device of aspect 6, wherein the device is configured to focus the excitation radiation at three or more different distances.

8. The device of any of aspects 5 to 7, wherein

i) the device is configured to change a spacing between the first means and the sample container to focus the excitation radiation at two or more different distances, and/or
ii) the first means comprises an optical means configured to change focusing such that a focal point can be generated subsequently at two or more different distances.

9. The device of aspect 8, wherein the device is configured to change the spacing in a stepwise manner or in a continuous manner.

10. The method or the device of any of the preceding aspects, wherein the excitation radiation means and the capture means for capturing the induced radiation are located on the same side of the sample container, preferably such that it is not necessary to direct the excitation radiation through the sample.

11. The method or device of any of the preceding aspects, wherein the configuration is such that the excitation radiation radiates along a first direction and the induced radiation radiates along a second direction, wherein the first direction and the second direction include an angle of 180°, preferably an angle between 170° and 180°, preferably an angle between 160° and 180°, preferably an angle between 150° and 180°, preferably an angle between 140° and 180°, preferably an angle between 130° and 180°.

12. The method or the device of any of the preceding aspects, wherein the sample container is configured such that the sample can flow through the sample container, passing the wall segment.

13. The method or the device of any of the preceding aspects,

wherein the sample container is tube-shaped, preferably with a circular, rectangular or oval cross-section, and/or
wherein the sample container is a hand-held device.

14. The method or the device of any of the preceding aspects, wherein

i) the wall segment (10) of the sample container (4) is made of glass, quartz glass, sapphire or plastic, and/or
ii) the sample container (4) is a tube, a flowtube, a flow cell, a cuvette, a vial, a syringe, a capillary or a plate.

15. The method or the device of any of the preceding aspects, wherein the substance is a protein and/or an amino acid, for example tryptophan, tyrosine, phenylalanine or histidine, or a group of amino acids.

16. The method or device of any of the preceding aspects, wherein the excitation radiation is ultraviolet or visible or infrared light.

17. The method or device of any of the preceding aspects, wherein the excitation radiation shows a wavelength spectrum within 200 nm and 400 nm.

18. The method or device of any of the preceding aspect, wherein the excitation radiation shows two or more wavelengths.

19. The method or the device of any of the preceding aspects, wherein
the substance is measured at a high concentration, wherein high concentration is preferably within the range of 50 g/L to 700 g/L, preferably within the range of 50 g/L to 300 g/L.

20. The method or the device of any of the preceding aspects, wherein
the substance is measured at a low concentration, wherein low concentration is preferably within the range of 10 mg/L to 50 g/L, preferably within the range of 100 mg/L to 50 g/L.

21. The method or device of aspect 20 in its dependence on aspect 19, wherein high concentration and low concentration are measured at different excitation wavelengths,

wherein the high concentration is preferably measured with the excitation radiation having a wavelength or wavelength spectrum between 290 nm and 330 nm, and/or
wherein the low concentration is preferably measured with the excitation radiation having a wavelength or wavelength spectrum between 230 nm and 290 nm.

22. The method or device of any of the preceding aspects, wherein measurement duration is between 10 ms and 100 s per sample, preferably between 10 ms and 10 s, preferably between 10 ms and 1 s.

23. The method or device of any of the preceding aspects, wherein the sample is a solution, preferably an aqueous solution.

24. The method or the device of any of the preceding aspects, wherein the first distance is at least 0.5 mm, preferably at least 1 mm, preferably at least 1.5 mm, preferably at least 2 mm, preferably at least 3 mm, preferably at least 4 mm, preferably at least 5 mm, preferably at least 7 mm.

25. The method or the device of any of the preceding aspects, wherein the first distance is at most 30 mm, preferably at most 20 mm, preferably at most 15 mm, preferably at most 10 mm, preferably at most 7 mm.

26. The method or the device of any of the preceding aspects,
wherein the measurement value is an intensity value, preferably an intensity-distance measurement, wherein the intensity value is preferably

(a) an intensity at a maximum of an intensity distribution;
(b) an integrated intensity of an intensity distribution;
(c) a width of the curve at pre-determined height, e. g. 50% of maximum, full width at half maximum or at several pre-determined heights of an intensity distribution;
(d) a height at a pre-determined location of the intensity distribution, preferably shifted from the maximum;
(e) a skewness of an intensity distribution; and/or
(f) a kurtosis of an intensity distribution.

27. A method for measuring a concentration value of a substance within a sample, comprising the following steps:

providing a sample container with a transparent wall segment on at least one side of the sample container,
providing a sample having an unknown concentration of the substance in the sample container,
providing an excitation radiation having a focal point such that the excitation radiation reaches into the sample container via the wall segment such that the focal point is located at a first distance from the wall segment,
capturing a measurement value by measuring an induced radiation being induced by an interaction of the excitation radiation with the sample, wherein the interaction comprises fluorescence and/or scattering and wherein the induced radiation leaves the sample container via said wall segment,
comparing the measurement value to a comparative value to derive a value indicative of the unknown concentration value.

28. A method for measuring a concentration value of a substance within a sample, comprising the following steps:

providing a sample container with a transparent wall segment on at least one side of the sample container,
providing a sample having an unknown concentration of the substance in the sample container,
providing an excitation radiation having an intensity such that the excitation radiation reaches into the sample container via the wall segment,
capturing a measurement value by measuring an induced radiation being induced by an interaction of the excitation radiation with the sample, wherein the interaction comprises fluorescence and/or scattering and wherein the induced radiation leaves the sample container via said wall segment, and
comparing the measurement value to a comparative value to derive a value indicative of the unknown concentration value.

29. A method for measuring a concentration value of a substance within a sample, comprising the following steps:

providing a sample having an unknown concentration of the substance,
providing an excitation radiation having an intensity such that the excitation radiation reaches into the sample,
capturing a measurement value by measuring an induced radiation being induced by an interaction of the excitation radiation with the sample, wherein the interaction comprises fluorescence and/or scattering and wherein the induced radiation leaves the sample, and
comparing the measurement value to a comparative value to derive a value indicative of the unknown concentration value.

## SHORT DESCRIPTION OF THE DRAWINGS

The subject-matter of the disclosure will be explained in more detail with reference to preferred exemplary embodiments which are illustrated in the attached drawings, in which:

Fig. 1 is a schematic sketch of a device for measuring a concentration value of a substance within a sample according to the present disclosure.
Fig. 2 is a detail of the device illustrating two different adjustments between excitation radiation means of the device and a sample container containing the sample.
Fig. 3 is a diagram showing a measured intensity value in dependence on a scanning position of the excitation radiation means vis-à-vis the sample.
Fig. 4 is a diagram illustrating a measurement indicative of an accuracy of a method for measuring a concentration value of a substance within a sample according to the present disclosure.
Fig. 5 is a diagram showing absorbance of a protein.
Fig. 6 shows an example of a device according to the present description, comprising a flow cell as container.
Fig. 7 shows an example of a device according to the present description, comprising a sample container in the form of a vial.
Fig. 8 shows a sketch of an optical setup for an absorbance measurement according to prior art.

## DETAILED DESCRIPTION

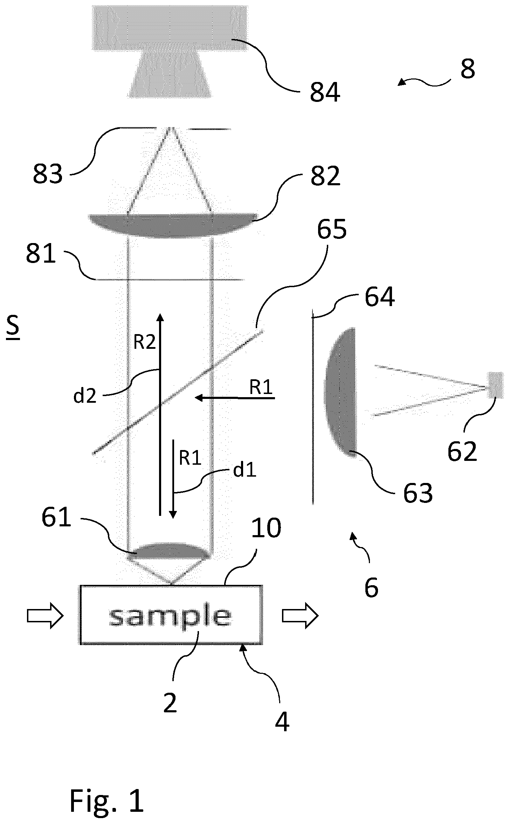

Fig. 1 shows a rough sketch of an exemplary set-up of a device for measuring a concentration value of a substance within a sample 2 according to the present disclosure.

The substance may be a protein. The substance may be an amino acid. The substance may be histidine. The substance may be an aromatic amino acid. The substance may be tryptophan, tyrosine or phenylalanine. The substance may be a group of amino acids, for example a group of aromatic amino acids. The substance may be a fluorescence substance. The sample may comprise any mixture of the above-mentioned substances.

The sample may be a solution, e.g., the sample may be an aqueous solution.

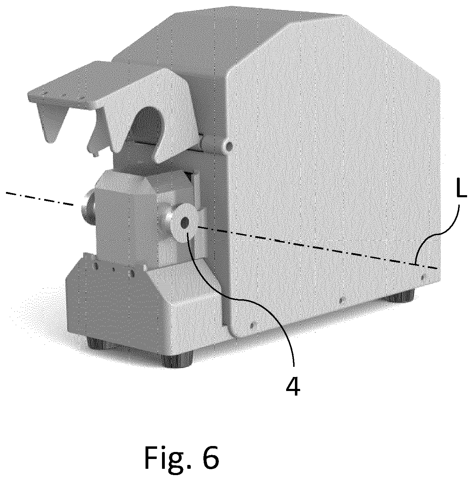

The sample is preferably provided in a sample container 4 with a transparent wall segment 10 on at least one side S of the sample container 4. Here, "side" may be understood as comprising a half space, e.g. a half space with reference to a midpoint of the sample container 4. The sample container may be closed or sealed, e.g., in form of a vial or syringe. The sample container may be partly open, e.g., in form of a flow cell or capillary. For instance, the sample container 4 may be configured such that the sample 2 can flow through the sample container 4, passing the wall segment 10. The sample container 4 may be a flowtube, a flow cell, a cuvette, a vial, a capillary, a syringe, or a multiwell plate. An example of a corresponding device comprising such a sample container 4 is illustrated in Fig. 6. Advantageously, the sample container 4 may be tube-shaped, preferably with a circular, rectangular, or oval cross-section. The sample container 4 may define a main or longitudinal axis L. The midpoint of the sample container 4 may be a midpoint of a normal cross-section with respect to the main or longitudinal axis L of the sample container 4. The sample container 4 may be configured such that the sample 2 can flow through the sample container 4 along the main axis L, passing the wall segment 10.

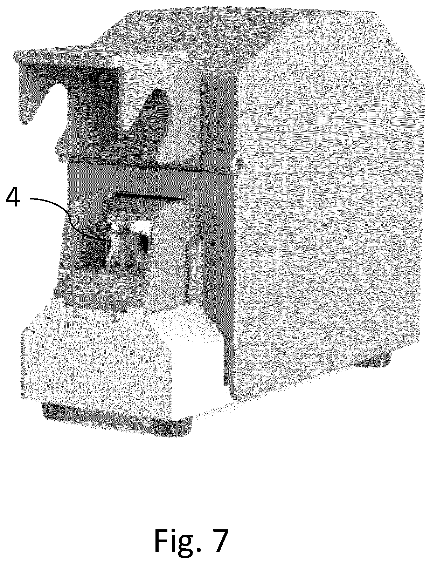

Fig. 7 shows an example of the device having a sample container 4 in the form of a vial.

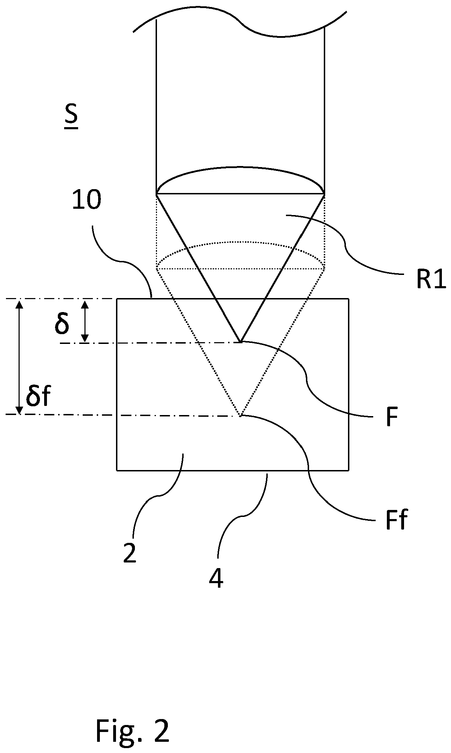

As further sketched in Fig. 1, the device further comprises first means 6 to generate an excitation radiation *R1*, also denominated "excitation radiation means" herein, having a focal point *F* (see Fig. 2) such that the excitation radiation *R1* reaches into the sample container 4 via the wall segment 10.

The excitation radiation R1 - also denominated excitation light herein - may be an ultraviolet radiation or ultraviolet light. The excitation radiation R1 preferably is chosen in dependence on the substance whose concentration is to be measured. For example, in case the substance is a protein or an amino acid, the excitation light R1 may be chosen in dependence on the absorption spectrum of the corresponding substance, as further outlined in more detail below.

As sketched in Fig. 2, the excitation radiation means 6 are configured such that the focal point F is located at a first distance $\delta$ from the wall segment 10. The first distance $\delta$ may be measured from a surface of the wall segment 10 facing the sample 2, i.e. from an inner surface of the wall segment 10. The first distance $\delta$ may be at least 0.5 mm, at least 1 mm, at least 1.5 mm, at least 2 mm, at least 3 mm, at least 4 mm, at least 5 mm or at least 7 mm. The first distance $\delta$ may be at most 30 mm, at most 20 mm, at most 15 mm, at most 10 mm, at most 7 mm.

The device further comprises second means 8 to capture a measurement value by measuring an induced radiation R2 being induced by an interaction of the excitation radiation R1 with the sample 2 and leaving the sample container 4 via said wall segment 10. The interaction may comprise fluorescence at least predominantly generated within an area around the focal point F. The induced radiation R2 may be at least predominantly composed of fluorescence radiation generated by the interaction of the excitation radiation R1 with the substance within the sample 2. The second means 8 is also denominated "capture means" or detector herein.

The wall segment 10 may be configured such that it is transparent for the excitation radiation R1 and transparent for the induced radiation R2. Herein, "transparent" may be defined as having a transmittance of at least 95%, at least 97%, at least 98% or at least 98% at the respective wavelength or wavelength spectrum. The wall segment 10 of the sample container 4 may be for example a plane segment or a curved segment (e.g. the wall of a vial or a syringe). The wall segment 10 may be made of e. g. glass, quartz glass, sapphire, or plastic.

The device comprises the sample container 4 having the transparent wall segment 4 on at least one side *S*, e.g., with respect to the sketch of Fig. 1 on the "upper" side. The first means 6 or excitation radiation means 6 may comprise a lens 61 configured to concentrate or converge the excitation radiation *R1* such that it forms the focal point *F*. The first means 6 may further comprise a radiation source 62, for example comprising an optical fiber, an excitation lens 63, and optionally an excitation filter 64. Further the first means 6 may comprise a dichroic filter 65 or mirror configured to change the direction of the radiation generated by the radiation source 62 between the radiation source 62 and the lens 61.

The radiation source 62 of the first means may be configured to radiate an electromagnetic radiation within a first wavelength range and the excitation filter 64 may be configured to restrict the first wavelength range to a second wavelength range which is smaller than the first wavelength range. The second wavelength range may be less than 40 nm, preferably less than 30 nm, preferably less than 20 nm, preferably less than 15 nm.

The lens 61 may be further configured to also act on the induced radiation *R2,* particularly by collimating the induced radiation *R2*. In this way it can be achieved that the excitation radiation *R1* radiates along a first direction *d1* and the induced radiation *R2* radiates along a second direction *d2* opposite to the first direction *d1*. In other words, the first direction *d1* and the second direction *d2* may include an angle of 180°. Specifically, the dichroic filter 65 may be configured to direct the excitation radiation R1 into the first direction *d1*.

The second means 8, i.e. the capture means 8 or detector 8 may comprise a fluorescence filter 81, a lens 82, e.g. a Tube lens 82, a pinhole 83, and a sensor 84, for example in the form of a photomultiplier tube, a photodiode, an Si-photomultiplier, or a spectrometer.

The first means 6 and the second means 8 may be integrated within one optics module.

The set-up of the device allows to make the induced radiation R2 radiating in a direction substantially or exactly opposite to the direction of the excitation radiation R1 in an easily manageable manner. Thus, the set-up is particularly suited for measuring "from one side" only.

A method for measuring a concentration value of a substance within a sample according to the present description comprises the following steps:

(i) providing the sample container 4, (ii) providing a sample 2 having an unknown concentration of the substance in the sample container 4, (iii) providing the excitation radiation *R1* having a focal point *F* such that the excitation radiation reaches into the sample container 4 via the wall segment 10 such that the focal point *F* is located at the first distance $\delta$ from the wall segment 10, (iv) capturing a measurement value by measuring an induced radiation *R2,* also denominated induced light herein, being induced by an interaction of the excitation radiation *R1* with the sample 2, wherein the interaction comprises fluorescence and wherein the induced radiation *R2* leaves the sample container 4 via said wall segment 10, and (v) comparing the measurement value to a comparative value *C* to derive a value indicative of the unknown concentration value.

Fluorescence is emitted in all directions. In particular, fluorescence light is emitted substantially uniformly in all directions evenly. Therefore, the capture means (detector) 8 can be suitably positioned on the same side as the excitation radiation means 6 (light source). For example, the excitation radiation means 6 and the capture means 8 can be position on the above-mentioned side *S* of the sample container 4. Thus, spatial fluorescence can be suitably used as a direct measure for extinction of the excitation radiation R1 between the wall segment 10 of the sample container 4 and the focal point *F* in order to deduce information about the corresponding concentration value.

The device and the method according to the present description allows mainly due to the usage of fluorescence for a very quick or fast measurement. For example, a measurement duration of between 10 ms and 100 ms can be achieved. More generally, measurement durations may be within a time range of 10 ms to 10 s, or 10 ms to 1 s.

The extinction of the excitation radiation *R1* between the wall segment 10 of the sample container 4 and the focal point *F* may be described as a "primary inner filter effect". This extinction is dependent on the extinction coefficient $\varepsilon$ of the corresponding substance which as such depends on the wavelength $\lambda$ of the excitation radiation *R1*, i. e. $\varepsilon = \varepsilon(\lambda(R1))$. Preferably, the sample 2 is configured such that its extinction behavior, for example its extinction coefficient is predominantly determined by the extinction coefficient of the substance within the wavelength spectrum of the excitation radiation *R1*. In case of an aromatic amino acid or histidine, the wavelength spectrum of the excitation radiation *R1* may be within 230 nm and 330 nm, as further described below.

On the other hand, the extinction of the induced radiation *R2* between the area around the focal point *F* where it is generated and the corresponding boundary of the sample 2, for example an inner surface of the transparent wall 10 of the sample container 4, may be described as a "secondary inner filter effect". As the induced radiation *R2* comprises the generated fluorescence radiation as described above, its wavelength (or wavelength spectrum) is typically larger (or comprises larger wavelength values) than that of the excitation radiation *R1* - due to the so-called "red-shift" or "Stokes-shift", i.e. $\lambda(R2) > \lambda(R1)$. Consequently, the extinction coefficient regarding the secondary inner filter effect, i.e. $\varepsilon(\lambda(R2))$ generally differs from the extinction coefficient regarding the primary inner filter effect, i.e. $\varepsilon(\lambda(R1))$.

In case of an aromatic amino acid or histidine or a protein, the primary inner filter effect is typically significantly more dominant than the secondary inner filter effect. Even more, the secondary inner filter effect can be often neglected in such a case. In other words, for amino acids and proteins, there is basically no re-absorption of the induced radiation *R2* and also scattering can be typically neglected. Therefore, the intensity of the measured induced radiation *R2* may be considered in such a case as a quasi "direct" measure of how much excitation radiation *R1* reaches to the focal point *F* - due to the primary inner filter effect - without having been absorbed (or scattered) before.

It is noted that for other substances, re-absorption may occur, and also scattering can reduce the intensity of the measured induced radiation. Thus, a decrease of the intensity with increasing depth of the focal point *F* within the sample 2 may be based not only on the absorbance of the excitation radiation *R2*, but also on other physical phenomena, e.g., absorbance of the induced radiation R2 or scattering. However, neither absorbance of the induced radiation nor scattering change the basic operational mode of the setup, as both would also occur in a corresponding calibration sample used to obtain a corresponding comparative value.

The device may be configured to focus the excitation radiation *R1* at a further focal point *Ff* at a second distance $\delta f$ different from the first distance $\delta$. This allows a corresponding further measurement of the induced radiation *R1*. Correspondingly, the method may further comprise the following steps: providing the excitation radiation *R1* at the further focal point *Ff* at the second distance $\delta f$ and capturing a corresponding second measurement value. The step of comparing the measurement value to a comparative value to derive a value indicative of the unknown concentration value may further comprise comparing the second measurement value to a second comparative value. In this way an improved accuracy in measuring the unknown concentration value of the substance in the sample can be achieved.

The device may be configured to focus the excitation radiation *R1* at three or more different distances $\delta$, $\delta f$. This enables, correspondingly, achieving a further improved accuracy.

The device may be configured to change a spacing between the first means 6 and the sample container 4 to focus the excitation radiation *R1* at two or more different distances $\delta$, $\delta f$. The configuration may be such that the first means 6 can be moved or translated relative to the sample container 4 or the sample 2 to change the spacing. Additionally or alternatively, the configuration may be such that the sample container 4 can be moved or translated relative to the first means 6 to change the spacing. In other words, according to such an embodiment the relative spacing between the sample container and the first means 6 can be varied.

The device may be configured to change the spacing in a stepwise manner or in a continuous manner. Changeability in a stepwise manner may be more preferred since it is generally more suited to achieve particularly short time interruptions between two subsequent measurements as compared to the continuous manner. Thus, a time duration needed for a measurement can be reduced. In this way a measurement duration of only 10 ms can be achieved.

In other words, the intensity of the induced radiation can be measured continuously while changing the distance or spacing between the optics module and the sample or sample container. Alternatively, one may measure at one or more pre-determined depths. This is advantageous since this does not require movable parts.

Also, the measurement with moving parts can be done when approaching the optics module towards the sample, when retracting it from the sample or both.

Further additionally or alternatively, the first means 6 may comprise an optical means configured to change focusing such that a focal point *F* can be generated subsequently at two or more different distances $\delta$, $\delta f$. For example, the optical means may comprise a focus variable lens.

Thus, specifically, the device allows for varying the pathlength of the excitation radiation *R1* by (i) using focused excitation radiation *R1* and induced radiation *R2* that are confocal and then (ii) changing where in the sample 2 the focal point lies *F*. This can be done either by changing the optical configuration or by moving the whole optics module towards or away from the sample 2. It is noted that varying the pathlength can be achieved without immersing any measuring device into the sample.

In order to obtain a comparative value, the method may further comprise the following steps: providing a reference sample having a known concentration of the substance in the sample container 4 or in a corresponding further sample container, providing the excitation radiation *R1*, capturing a reference value by measuring a reference induced radiation being induced by an interaction of the excitation radiation *R1*, and determining the comparative value based on the reference value.

The corresponding further sample container may be a sample container that is identical in construction to the first-mentioned sample container. The corresponding further sample container may have a transparent wall segment 10 that is identical in construction to the transparent wall segment 10 of the first-mentioned sample container.

In order to obtain several comparative values, the method may further comprise the following steps: capturing a second reference value based on the second distance $\delta f$ and determining a second comparative value based on the second reference value. The method may further comprise correspondingly capturing a third reference value based on a third distance and determining a third comparative value based on the third reference value, and so on.

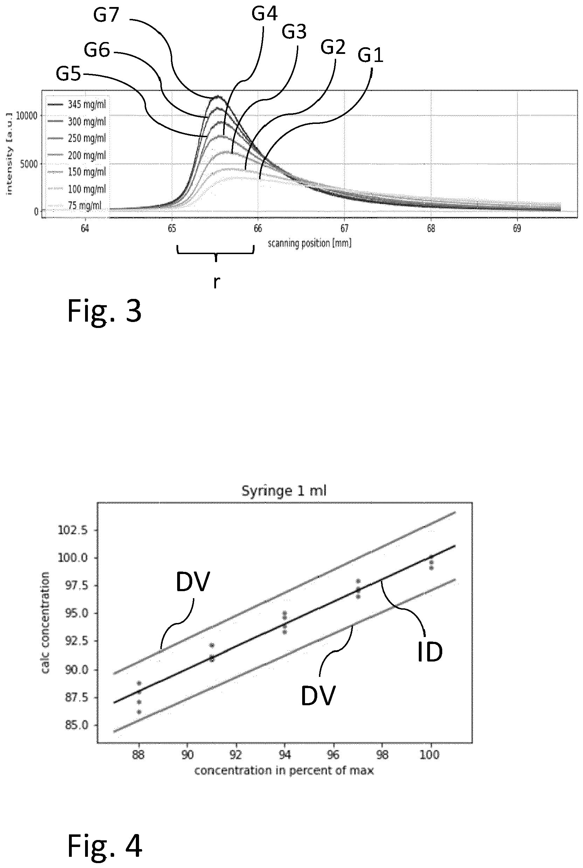

Fig. 3 shows a diagram illustrating exemplarily raw data of intensity values of a measured induced radiation *R2* plotted on the ordinate in dependence on the distance $\delta$. On the abscissa are plotted values, denominated "scanning position", indicating a relative distance between the first means 6, i.e. the excitation radiation means 6 and the sample container 4 which correlate linearly with the distance $\delta$ between the focal point *F* of the excitation radiation *R1* and the transparent wall segment 10 of the sample container 4.

The data are obtained by moving the optics module relative to the sample container 4 in a continuous manner.

The diagram shows seven graphs *G1* to *G7* representing corresponding correlations for seven different concentration values: *G1* for 75 g/L, *G2* for 100 g/L, *G3* for 150 g/L, *G4* for 200 g/L, *G5* for 250 g/L, *G6* for 300 g/L, and *G7* for 345 g/L.

The diagram shows that for all concentration values the intensity of the induced radiation, i.e. for example the fluorescence intensity first increases as the area around the focal point *F* "enters" the sample 2 (roughly at scanning position 64.5 mm), peaks when most of the area around the focal point F is within the sample 2 (roughly at scanning position 65.5 mm) and decays afterwards as the excitation radiation *R1* is increasingly absorbed by the sample 2 with increasing pathlength. For higher concentrations, typically, the overall intensity will also be higher within a distance range around the maxima of the graphs, as can be seen for example within the distance range "r" roughly corresponding to the range within scanning positions 65 mm and 66 mm in the shown example. (It is noted that for a strongly scattering substance or one that shows re-absorbance, that means for a case showing an increased secondary inner filter effect, this is not necessarily the case.)

If a significant concentration of a substance is to be measured, the absorbance of the excitation radiation *R1* may be very high. When measuring at 280 nm, which corresponds to the maximum in absorbance for tryptophan residues in proteins, excitation radiation is mostly absorbed after several hundred micrometers in protein concentration ranges of 100 g/L or more. As the optical resolution of the focal point *F* is limited, it is advantageous to use another wavelength for such a case, for example roughly between 290 nm and 330 nm, for example between 305 nm and 310 nm, i.e. a wavelength at the "very end of the excitation spectrum". Fig. 5 shows a corresponding exemplary absorbance diagram of a protein (absorbance in arbitrary units). Here, the extinction coefficient at 305 nm is significantly lower and consequently, the absorbance is significantly lower, for example about 5. Accordingly, the excitation radiation means 6 can be used to position the focal point *F* in a practically well manageable distance $\delta$ from the wall segment 10 of the sample container 4, more specifically from a surface of the wall segment 10 facing the sample 2.

For example, it is advantageous for measuring a high concentration value if the wavelength or wavelength spectrum of the excitation radiation *R1* is chosen such that its absorbance is less than 10, less than 7, less than 5, less than 3, less than 2, or less than 1.

In case a low concentration of a corresponding substance (i.e. for example an aromatic amino acid, histidine or a protein) is to be measured, for example 100 mg/L, the excitation radiation *R1* may have a wavelength or wavelength spectrum within 230 nm and 290 nm, for example between 270 nm and 290 nm.

Accordingly, to measure a concentration, specifically the following steps may be performed:

(1) samples of known concentration, in an appropriate concentration range, are measured,
(2) sample of unknown concentration is measured,
(3) intensity-distance dependencies, such as generally exemplarily shown in Fig. 3, regarding the measured sample are compared to those regarding the samples having the known concentration to determine concentration of unknown sample.

Measurement values that can be used to compare intensity-distance plots include, but are not limited to: (a) intensity at maximum, (b) integrated intensity, (c) width of the curve at pre-determined height, e. g. 50% of maximum, or at several pre-determined heights, (d) height at pre-determined distance from the maximum, (e) skewness, or (f) kurtosis. Further, for example a model fitted to an intensity distribution can be used. Further comparison of a statistical analysis of an intensity distribution can be used, for example, a difference between the model and mean, principal component analysis (PCA) to analyse the difference in the shape between curves. A person skilled in the art will understand that also other known statistical methods are applicable, e.g., neural networks etc.

Fig. 4 is a diagram illustrating measurements indicative of an accuracy or precision of a method for measuring a concentration value of a substance within a sample according to the present disclosure. As denominated in Fig. 4, a syringe, having a volume of 1 mL was used for these measurements.

The diagram of Fig. 4 shows measured concentration values on the ordinate and known concentration values on the abscissa. The data were generated by using a first sample having a known concentration of 100%, a second sample having a known concentration of 97%, a third sample having a concentration of 94%, and a fourth sample having a concentration of 91%, and a fifth sample having a concentration of 88%.

First, the first to fourth samples were measured to generate a first calibration curve (not shown in the diagram). Then, the fifth sample was measured and a concentration value of the fifth sample was calculated or "yielded" by a comparison to the first calibration curve.

Next, the first, second, third and fifth sample were measured to generate a second calibration curve (not shown). Then the fourth sample was measured and a concentration value of the fourth sample was yielded by a comparison to the second calibration curve, and so on. In this way, five calibration curves were generated and a subsequently, an "ideal calibration curve" *ID*, indicated in Fig. 4 as a straight line was generated using the five calibration curves. The dots shown in the diagram indicate the corresponding measurement values. Moreover, two lines *DV* are indicated in the diagram representing a 3% deviation of the ideal calibration curve *ID*. The data points shown here, have a coefficient of variance of roughly 1%.

It is further noted that

(1) Generally, the excitation radiation R1 does not need to be focused. Alternatively, the excitation radiation *R1* reaching into the sample container 4 could be collimated or differently shaped. In such a case, the optics module is not "con-focal".

(2) The method and device according to the present description is generally also suited to work for substances that show no fluorescence, but just scattering.

(3) Measuring proteins with an excitation radiation R1 having a wavelength between 305 nm and 310 nm is advantageous, since this is a wavelength region where "normal" glass starts to be transparent, enabling to determine protein concentration directly in vials or syringes in which they are sold. This can be particularly useful in product release. Other methods cannot do this (a) because at lower excitation wavelength, the glass wall of the vials or syringes would absorb practically all the excitation radiation and (b) because the vial or syringe is optically not super well defined, so a transmission optics would be difficult.

(4) The induced radiation *R2* may contain additional information about the measured substance. E.g., for proteins, the spectral properties of the emitted tryptophan fluorescence reports on the direct environment of said tryptophan and thus contains information about the folding state of the protein. In this way, also denaturation and aggregation can be detected.

(5) The focus of the technology according to the present description does not need to lie on high concentrations. Already the possibility to measure with an optics from only one side is a big advantage. The possibility to measure protein concentration directly in vials or syringes is another one. In general, fluorescence is very well suited to measure small concentrations, though this would probably rather be purely intensity based, which would benefit from an additional brightness measurement of the radiation source, e. g. in form of a LED.

The present invention particularly allows complying, *inter alia,* the following requirements:

- Concentration values between 150 g/L and 300 g/L can be measured
- A relative accuracy of measurement of +/- 3% can be achieved
- Very fast measurements are possible, approximately down to 1 s per measurement
- The measurement can be carried out without damaging the sample
- The measurement can be carried out in-line with a very small footprint
- A single use flow-cell may be used as sample container or an autoclavable sample container, e. g. made of steel and sapphire.

While the present disclosure has been described in detail in the drawings and forgoing description, such description is to be considered illustrative or exemplary and not restrictive. Variations to the disclosed embodiments can be understood and effected by those skilled in the art and practicing the claimed subject-matter, from a study of the drawings, the disclosure, and the appended claims. In the claims, the word "comprising" does not exclude other elements, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

**Claims**

**1.** A method for measuring a concentration value of a substance within a sample, comprising the following steps:

providing a sample container (4) with a transparent wall segment (10) on at least one side (S) of the sample container (4),
providing a sample (2) having an unknown concentration of the substance in the sample container (4),
providing an excitation radiation (R1) having a focal point (F) such that the excitation radiation reaches into the sample container (4) via the wall segment (10) such that the focal point (F) is located at a first distance ($\delta$) from the wall segment (10),
capturing a measurement value by measuring an induced radiation (R2) being induced by an interaction of the excitation radiation (R1) with the sample (2), wherein the interaction comprises fluorescence and wherein the induced radiation leaves the sample container (4) via said wall segment (10), and
comparing the measurement value to a comparative value to derive a value indicative of the unknown concentration value.

**2.** The method of claim 1, further comprising the following steps:

providing the excitation radiation (R1) at a further focal point (Ff) at a second distance ($\delta f$) different from the first distance ($\delta$), and
capturing a corresponding second measurement value,
wherein the step of comparing the measurement value to a comparative value to derive a value indicative of the unknown concentration value further comprises comparing the second measurement value to a second comparative value.

**3.** The method of claim 1 or 2, further comprising the following steps:

providing a reference sample having a known concentration of the substance in the sample container (4) or in a corresponding further sample container,
providing the excitation radiation (R1),
capturing a reference value by measuring a reference induced radiation being induced by an interaction of the excitation radiation (R1) with the reference sample, and
determining the comparative value based on the reference value.

**4.** The method of claim 3 in its dependence on claim 2, further comprising the following steps:

capturing a second reference value based on the second distance (δf), and
determining a second comparative value based on the second reference value.

**5.** A device for measuring a concentration value of a substance within a sample, comprising

a sample container (4) with a transparent wall segment (10) on at least one side (S) of the sample container (4),
first means (6) to generate an excitation radiation (R1) having a focal point (F) such that the excitation radiation reaches into the sample container (4) via the wall segment (10) such that the focal point (F) is located at a first distance (δ) from the wall segment (10), and
second means (8) to capture a measurement value by measuring an induced radiation (R2) being induced by an interaction of the excitation radiation (R1) with the sample (2), wherein the interaction comprises fluorescence and wherein the induced radiation leaves the sample container via said wall segment.

**6.** The device of claim 5, wherein the device is configured to focus the excitation radiation (R1) at a further focal point (Ff) at a second distance (δf) different from the first distance (δ).

**7.** The device of claim 6, wherein the device is configured to focus the excitation radiation (R1) at three or more different distances (δ, δf).

**8.** The device of any of claims 5 to 7, wherein

i) the device is configured to change a spacing between the first means (6) and the sample container (4) to focus the excitation radiation (R1) at two or more different distances (δ, δf), and/or
ii) the first means (6) comprises an optical means configured to change focusing such that a focal point (F) can be generated subsequently at two or more different distances (6, 6f).

**9.** The device of claim 8, wherein the device is configured to change the spacing in a stepwise manner or in a continuous manner.

**10.** The method or the device of any of the preceding claims, wherein the excitation radiation means (6) and the capture means (8) for capturing the induced radiation (R2) are located on the same side (S) of the sample container (4), preferably such that it is not necessary to direct the excitation radiation through the sample.

**11.** The method or the device of any of the preceding claims, wherein the sample container (4) is configured such that the sample (2) can flow through the sample container (4), passing the wall segment (10).

**12.** The method or the device of any of the preceding claims,

wherein the sample container (4) is tube-shaped, preferably with a circular, rectangular or oval cross-section, and/or
wherein the sample container (4) is a hand-held device.

**13.** The method or the device of any of the preceding claims, wherein

i) the wall segment (10) of the sample container (4) is made of glass, quartz glass, sapphire or plastic, and/or
ii) the sample container (4) is a tube, a flowtube, a flow cell, a cuvette, a vial, a syringe, a capillary or a plate.

**14.** The method or device of any of the preceding claims, wherein the excitation radiation (R1) shows a wavelength spectrum within 200 nm and 400 nm.

**15.** The method or the device of any of the preceding claims,
wherein the measurement value is an intensity value, preferably an intensity-distance measurement, wherein the intensity value is preferably

(a) an intensity at a maximum of an intensity distribution;
(b) an integrated intensity of an intensity distribution;
(c) a width of the curve at pre-determined height, e. g. 50% of maximum, full width at half maximum or at several pre-determined heights of an intensity distribution;
(d) a height at a pre-determined location of the intensity distribution, preferably shifted from the maximum;
(e) a skewness of an intensity distribution; and/or
(f) a kurtosis of an intensity distribution.

84
8
83
82
65
81
64
S
R2
d2
R1
R1
d1
62
63
61
10
6
sample
2
4

Fig. 1

S
10
R1
δ
δf
F
Ff
2
4

Fig. 2

G7
G6
G5
G4
G3
G2
G1
345 mg/ml
300 mg/ml
250 mg/ml
200 mg/ml
150 mg/ml
100 mg/ml
75 mg/ml
intensity [a.u.]
10000
5000
0
64
65
66
67
68
69
scanning position [mm]
r

Fig. 3

Syringe 1 ml
102.5
100.0
97.5
95.0
92.5
90.0
87.5
85.0
calc concentration
DV
DV
ID
88
90
92
94
96
98
100
concentration in percent of max

Fig. 4

Protein
280 nm
Absorbance
240
260
280
300
320
340
Wavelength (nm)

Fig. 5

L
4

Fig. 6

4

Fig. 7

$I_{in}$
$I_0$
$I_{in}$
$I_1$

Fig. 8
Prior art

Europäisches Patentamt
European Patent Office
Office européen des brevets

# EUROPEAN SEARCH REPORT

Application Number
EP 22 19 1798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2011/022324 A1 (KNOPP KEVIN J [US] ET AL) 27 January 2011 (2011-01-27)<br>* paragraphs [0005] - [0018], [0052], [0147] - [0155], [0189]; figure 7A * | 1,3,<br>5-13,15<br>2,4 | INV.<br>G01N21/64<br><br>ADD.<br>G01N21/05 |
| X | CN 114 930 151 A (NOTAP TECH CO LTD) 19 August 2022 (2022-08-19)<br>* attached translation, pages 1, 11, 12, 30-32;<br>paragraphs [0003], [0061], [0153] - [0162]; figure 5 * | 1,5,<br>10-15 | |
| X | US 2022/197002 A1 (CANG HU [US] ET AL) 23 June 2022 (2022-06-23)<br>* paragraphs [0029], [0039] - [0043]; figures 1, 2 * | 1,5-15 | |
| X | US 2013/260372 A1 (BUERMANN DALE [US] ET AL) 3 October 2013 (2013-10-03)<br>* paragraphs [0050] - [0052], [0096]; figure 2 * | 1,5-13,<br>15 | |

TECHNICAL FIELDS SEARCHED (IPC)

G01N

The present search report has been drawn up for all claims

1

| Place of search | Date of completion of the search | Examiner |
|---|---|---|
| Munich | 6 February 2023 | Flentje, Farida |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 19 1798

This annex lists the patent family members relating to the patent documents cited in the above-mentioned European search report. The members are as contained in the European Patent Office EDP file on
The European Patent Office is in no way liable for these particulars which are merely given for the purpose of information.

06-02-2023

| Patent document cited in search report | Publication date | Patent family member(s) | Publication date |
|---|---|---|---|
| US 2011022324 A1 | 27-01-2011 | NONE | |
| CN 114930151 A | 19-08-2022 | AU 2020378640 A1 | 28-04-2022 |
| | | AU 2020379227 A1 | 21-04-2022 |
| | | CA 3153480 A1 | 14-05-2021 |
| | | CN 114930151 A | 19-08-2022 |
| | | CN 114930152 A | 19-08-2022 |
| | | EP 4055365 A1 | 14-09-2022 |
| | | EP 4055366 A1 | 14-09-2022 |
| | | JP 2023500642 A | 10-01-2023 |
| | | KR 20220092620 A | 01-07-2022 |
| | | KR 20220093215 A | 05-07-2022 |
| | | US 2022373557 A1 | 24-11-2022 |
| | | US 2022404284 A1 | 22-12-2022 |
| | | WO 2021089834 A1 | 14-05-2021 |
| | | WO 2021089841 A1 | 14-05-2021 |
| US 2022197002 A1 | 23-06-2022 | US 2022197002 A1 | 23-06-2022 |
| | | WO 2022056385 A1 | 17-03-2022 |
| US 2013260372 A1 | 03-10-2013 | AU 2013243998 A1 | 09-10-2014 |
| | | AU 2016222420 A1 | 22-09-2016 |
| | | AU 2019200400 A1 | 07-02-2019 |
| | | AU 2021200408 A1 | 18-03-2021 |
| | | BR 112014024789 B1 | 25-05-2021 |
| | | BR 122021002358 B1 | 26-10-2021 |
| | | CA 2867665 A1 | 10-10-2013 |
| | | CA 3138752 A1 | 10-10-2013 |
| | | CN 204832037 U | 02-12-2015 |
| | | EP 2834622 A1 | 11-02-2015 |
| | | HK 1201582 A1 | 04-09-2015 |
| | | IL 268205 A | 29-08-2019 |
| | | IL 273034 A | 30-04-2020 |
| | | JP 6159391 B2 | 05-07-2017 |
| | | JP 2015514218 A | 18-05-2015 |
| | | KR 20150000885 A | 05-01-2015 |
| | | KR 20200064162 A | 05-06-2020 |
| | | KR 20210080618 A | 30-06-2021 |
| | | MX 337140 B | 12-02-2016 |
| | | US 2013260372 A1 | 03-10-2013 |
| | | US 2014329694 A1 | 06-11-2014 |
| | | US 2017246635 A1 | 31-08-2017 |
| | | US 2020139375 A1 | 07-05-2020 |
| | | WO 2013151622 A1 | 10-10-2013 |

EPO FORM P0459

For more details about this annex : see Official Journal of the European Patent Office, No. 12/82